(19) **Europäisches Patentamt**
**European Patent Office**
**Office européen des brevets**

(11) **EP 2 571 808 B1**

(12) **EUROPEAN PATENT SPECIFICATION**

(45) Date of publication and mention
of the grant of the patent:
**17.07.2019 Bulletin 2019/29**

(51) Int Cl.:
***C01B 33/193*** *(2006.01)*   ***C09C 1/30*** *(2006.01)*
***B01J 20/28*** *(2006.01)*

(21) Application number: **11721235.7**

(22) Date of filing: **19.05.2011**

(86) International application number:
**PCT/EP2011/002508**

(87) International publication number:
**WO 2011/144346 (24.11.2011 Gazette 2011/47)**

(54) **POROUS SILICA PARTICLES AND METHODS OF MAKING AND USING THE SAME**

PORÖSE KIESELSÄURE-PARTIKEL UND VERFAHREN ZU IHRER HERSTELLUNG UND VERWENDUNG

PARTICULES POREUSES DE SILICE ET LEURS PROCÉDÉS DE FABRICATION ET D'UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2010 US 347076 P**

(43) Date of publication of application:
**27.03.2013 Bulletin 2013/13**

(60) Divisional application:
**18191744.4 / 3 456 686**

(73) Proprietor: **Grace GmbH
67545 Worms (DE)**

(72) Inventors:
• **KRETZSCHMAR, Markus
67122 Altrip (DE)**

• **HERRIG, Horst
67295 Bolanden (DE)**

(74) Representative: **Uexküll & Stolberg
Partnerschaft von
Patent- und Rechtsanwälten mbB
Beselerstraße 4
22607 Hamburg (DE)**

(56) References cited:
**WO-A1-03/055802          WO-A2-2004/073539
DE-A1-102008 017 747   US-A- 5 342 876
US-A- 5 342 876            US-A- 5 643 624
US-A- 5 643 624            US-A1- 2002 102 198
US-A1- 2002 102 198     US-A1- 2008 153 694
US-A1- 2008 160 053     US-A1- 2010 083 876
US-A1- 2010 083 876     US-B2- 7 566 433**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention is directed to porous silica particles, compositions containing porous silica particles, methods of making porous silica particles, and methods of using porous silica particles.

BACKGROUND OF THE INVENTION

WO 03/055802 A1 discloses an amorphous silica having a weight mean particle size in the range of 3 to 15 $\mu$m with at least 90 per cent by weight of particles having a size below 20 $\mu$m. In addition the silica may have a linseed oil absorption in the range of 70 to 150 $cm^3$/100g and a BET surface area of 10 to 450 $m^2$/g. The method of manufacturing such silica comprises (a) introducing an amount of an aqueous solution of alkali metal silicate and a first amount of mineral acid into an aqueous reaction mixture whilst applying high shear to the reaction mixture, (b) filtering the silica produced from the reaction mixture, (c) washing it, (d) flash drying the silica, and (e) comminuting the dried silica to the desired particle size distribution. US 2008/0160053 A1 discloses a method of manufacturing an abrasive silica material comprising a) reacting, under high shear mixing conditions, a first amount of silicate and a first amount of acid together to form a first silica material, and b) reacting, in the presence of the first silica material, a second amount of silicate and a second amount of acid together to form a dense phase coating on the surface of the first silica material, thereby forming a silica-coated silica material. The obtained material is filtered or centrifuged, washed, rapidly dried and comminuted. US 7 566 433 B2 discloses a process for the production of precipitated silica comprising a) using an aqueous solution of an alkali metal silicate, an alkaline earth metal silicate an organic base, an inorganic base and mixtures thereof, b) simultaneously metering alkali metal silicate and/or alkaline earth metal silicate and an acidifier into said initial charge with intensive stirring, c) stopping the feed, d) simultaneously metering alkali metal silicate and/or alkaline earth metal silicate and an acidifier with stirring, e) acidifying said reaction mixture to a pH of from 2.5 to 5.0, and f) filtering and drying said acidified reaction mixture. US 5 643 624 A discloses a method of manufacturing silica by forming silica particles by mixing silicates at acidic pH, stirring, filtering, washing, flash-drying, and comminuting. Such a precipitated amorphous silica is described to have i) a pore volume in the range from 1.6 to 2.5 $cm^3$/g, ii) a mean pore diameter in the range from 8.0 to 20.0 nm, iii) a surface area from at least 665 to 830 $m^2$/g, and iv) an oil absorption in the range from 250 to 350 $cm^3$/100g. Efforts continue in the art to further develop porous inorganic oxide particles, such as silica particles, having a desired combination of properties. For example, efforts continue to develop porous inorganic oxide particles, such as silica particles, having a desired average particle size and/or a desired particle size distribution; an increased BET surface area relative to known porous inorganic oxide particles; an increased oil absorption value, such as a DOA oil absorption value, relative to known porous inorganic oxide particles; an increased pore volume relative to known porous inorganic oxide particles; an increased particle stability relative to known porous inorganic oxide particles; or any combination of the above-referenced properties.

SUMMARY OF THE INVENTION

The present invention addresses some of the difficulties and problems discussed above by the discovery of porous silica particles having a combination of properties that were previously unknown to similar porous silica particles. The present invention provides porous silica particles as defined in claim 1.

In some exemplary embodiments, the porous silica particles of the present invention comprise a single point nitrogen adsorption surface area of at least 650 $m^2$/g.

In some exemplary embodiments, the porous silica particles of the present invention comprise (a) a single point nitrogen adsorption surface area of at least 650 $m^2$/g; and (b) a DOA oil absorption number of at least 260 ml/100 g.

In some exemplary embodiments, the porous silica particles of the present invention possess a porosity such that at least 0.5 $cm^3$/g of pore volume, as measured by BJH nitrogen porosimetry, stems from pores having a pore size of 10 nm (100Å or smaller, wherein the porosity of the particles is measured after drying the particles at 200°C for at least 2 hours followed by an activation at 200°C for two hours under vacuum. In other exemplary embodiments, the porous silica particles of the present invention possesses a porosity such that at least 0.6 $cm^3$/g of pore volume, as measured by BJH nitrogen porosimetry, stems from pores having a pore size of 16 nm (160Å) or smaller, wherein the porosity of the particles is measured after drying the particles at 200°C for at least 2 hours followed by an activation at 200°C for two hours under vacuum.

The semi-finished porous silica particles of the present invention comprise (a) a median particle size of at least 1 micron; and (b) a particle stability of at least 55% as measured using the Particle Stability test method discussed below.

The present invention also discloses methods of making porous silica particles having a desired combination of particle properties.

The method of making porous silica particles comprises the steps of introducing silica particle-forming reagents into a reaction vessel, while mixing under high shear, for a first length of time so as to result in a first reaction mixture; following the first length of time, halting introduction of silica particle-forming reagents into the reaction vessel while continuing the mixing under high shear for a second length of time; following the second length of time, introducing the silica particle-forming reagents into the reaction vessel, while mixing under high shear, for a third length of time so as to result in a second reaction mixture; following the third length of time, acidifying the second reaction mixture so as to reduce the pH of the second reaction mixture to 4.0 resulting in a third reaction mixture; separating precipitated silica particles from the third reaction mixture; washing the precipitated silica particles to produce washed precipitated silica particles; and drying the washed precipitated silica particles to form dried porous silica particles.

The present invention is further directed to methods of using porous silica particles. In some exemplary methods of using porous silica particles, the method comprises utilizing semi-finished (e.g., unmilled) porous silica particles, formed by the disclosed methods, in a given application (e.g., as a beer clarification agent, as a catalyst carrier, as a desiccant). In other exemplary methods of using porous silica particles, the method comprises utilizing finished porous silica particles, formed by the disclosed methods, in a given application (e.g., as a matting agent, as a filtering agent in beer stabilization, as a free flow agent).

These and other features and advantages of the present invention will become apparent after a review of the following detailed description of the disclosed embodiments and the appended claims.

BRIEF DESCRIPTION OF THE FIGURES

FIG. 1 depicts a block diagram of an exemplary process for forming porous silica particles of the present invention; and

FIG. 2 depicts a schematic diagram of an exemplary apparatus for forming porous silica particles of the present invention.

DETAILED DESCRIPTION OF THE INVENTION

To promote an understanding of the principles of the present invention, descriptions of specific embodiments of the invention follow and specific language is used to describe the specific embodiments. It will nevertheless be understood that no limitation of the scope of the invention is intended by the use of specific language. Alterations, further modifications, and such further applications of the principles of the present invention discussed are contemplated as would normally occur to one ordinarily skilled in the art to which the invention pertains.

It must be noted that as used herein and in the appended claims, the singular forms "a", "and", and "the" include plural referents unless the context clearly dictates otherwise. Thus, for example, reference to "an oxide" includes a plurality of such oxides and reference to "oxide" includes reference to one or more oxides and equivalents thereof known to those skilled in the art, and so forth.

As used herein, the term "high shear" means a stress which is applied parallel or tangential to a face of a material, as opposed to a normal stress which is applied perpendicularly. A high shear mixer uses a rotating impeller or high speed rotor, or a series of such impellers or inline rotors, usually powered by an electric motor, to "work" the fluid, creating flow and shear. The velocity, or tip speed of the fluid at the outside diameter of the rotor will be higher than the velocity at the centre of the rotor, and it is this that creates shear. Tip speeds above 20 m/s typically provide high shear conditions, but liquid viscosities and mixer design will also affect shear conditions.

As used herein, the term "inorganic oxide" is defined as binary oxygen compounds where metal is the cation and the oxide is the anion. The inorganic oxide of the present invention is silica.

As used herein, the term "particle" or "particulate" refers to porous or nonporous particles formed via any known process including, but not limited to, a solution polymerization process such as for forming colloidal particles, a continuous flame hydrolysis technique such as for forming fused particles, a gel technique such as for forming gelled particles, and a precipitation technique such as for forming precipitated particles, or combinations of thereof. The particles may be a variety of different symmetrical, asymmetrical or irregular shapes, including chain, rod or lath shape. The particles may have different structures including amorphous or crystalline, etc. The particles may include mixtures of particles comprising different compositions, sizes, shapes or physical structures, or that may be the same except for different surface treatments, which render them hydrophobic. Preferably, the silica particles are amorphous.

As used herein, the term "particle stability" means the measure of particle deagglomeration under shear force pursuant to the Particle Stability Test referenced herein.

As used herein, the term "pore size" means the diameter of the pores.

As used herein the term "porous particles" means particles having significant internal porosity as measured by nitrogen porosimetry, i.e., a porosity of more than 0.05 cm$^3$/g, and the term "non-porous" means particles having little or no internal porosity, i.e., an internal porosity of less than 0.05 cm$^3$/g. Examples of porous particles include, silica gel, precipitated silica, fumed silica, and examples of non-porous particles include colloidal silica.

As used herein, the term "substantially" means within a reasonable amount, but includes amounts which vary from 0% to 50% of the absolute value, from 0% to 40%, from 0% to 30%, from 0% to 20% or from 0% to 10%.

As used herein, the term "rapid drying" means accelerated drying of newly formed silica particles that may be performed by equipment with evaporative capacities of from 200 to 800 kg/(m$^2$/h). Rapid drying is typically performed in less than two minutes such that the particles possess a moisture level of less than 10% by weight of the particle, and even less than 5% by weight of the particle.

The present invention is directed to porous silica particles, The present invention further discloses methods of making porous silica particles, as well as methods of using porous silica particles. A description of exemplary porous silica particles, exemplary methods of making porous silica particles, and exemplary methods of using porous silica particles is provided below.

I. Porous Silica Particles

The porous silica particles of the present invention have a physical structure and properties that enable the porous silica particles to provide one or more advantages when compared to known precipitated porous silica particles.

The porous silica particles of the present invention may be characterized as "semi-finished" or "finished" particles. As used herein, the term "semi-finished particles" refers to un-milled particles, namely, particles that are not further processed following formation (discussed below). As used herein, the term "finished particles" refers to classified particles, namely, particles that are classified following a drying step. As discussed further below, the disclosed methods of making porous silica particles provide a unique property set for both "semi-finished" and "finished" particles of the present invention, which enable the "semi-finished" and "finished" particles to be suitable for use in a variety of applications (as discussed further below).

The porous silica particles of the present invention may have any shape, which depends upon the method of particle formation. For example, if the particles are formed by spray drying, they may be spherical, and when formed by other means, may be irregular. In one exemplary embodiment, the particles of the present invention have an irregular particle shape with an average largest particle dimension (i.e., a largest length, width or diameter dimension). In one exemplary embodiment, the semi-finished porous silica particles of the present invention have an average largest particle dimension of less than 50 microns ($\mu$m), more typically, less than 30 $\mu$m. In another exemplary embodiment of the present invention, the semi-finished porous silica particles have an average largest particle dimension of from 15 $\mu$m to 30 $\mu$m, and even from 18 $\mu$m to 25 um. In some embodiments the particle size distribution of the semi-finished particles may range from 1 to 300 microns, and even from 1 to 200 microns.

Semi-finished particles of the present invention may be classified to form "finished" particles having a desired average particle size and particle size distribution. In one exemplary embodiment, the finished porous silica particles of the present invention have an average largest particle dimension of less than 30 microns ($\mu$m), more typically, less than 20 $\mu$m. In another exemplary embodiment of the present invention, the finished porous silica particles have an average largest particle dimension of from 1 $\mu$m to 20 $\mu$m, and even from 3 $\mu$m to 15 $\mu$m. In some embodiments the particle size distribution of the finished particles may range from 0.1 to 100 microns, and even from 0.1 to 50 microns.

The porous silica particles of the present invention typically have an aspect ratio of less than 1.4 as measured, for example, using Transmission Electron Microscopy (TEM) techniques. As used herein, the term "aspect ratio" is used to describe the ratio between (i) the average largest particle dimension of the porous silica particles and (ii) the average largest cross-sectional particle dimension of the porous silica particles, wherein the cross-sectional particle dimension is substantially perpendicular to the largest particle dimension of a given porous silica particle. In some embodiments of the present invention, the porous silica particles have an aspect ratio of less than 1.3 (or less than 1.2, or less than 1.1, or less than 1.05). In another embodiment, the porous inorganic silica has an aspect ratio of from 1.0 to 12.

The semi-finished particles of the present invention have a particle stability of at least 55% (or at least 60%, or at least 65%, or at least 70%, or at least 72%) as measured via the Particle Stability Test method.

In some embodiments, the finished particles of the present invention have a particle stability of at least 90% as measured via the Particle Stability Test method described below. In other embodiments, finished particles of the present invention have a particle stability of at least 95% (or at least 96%, or at least 97%, or at least 98%, or at least 99%) as measured via the Particle Stability Test method.

In some exemplary embodiments, the porous silica particles of the present invention (e.g., the finished particles) may have a specific surface area, as measured by the single point nitrogen adsorption method, of at least 650 m$^2$/g. In some exemplary embodiments, the porous silica particles have a specific surface area of from 650 to 1000 m$^2$/g. In other exemplary embodiments, the porous silica particles have a specific surface area of from 660 to 900 m$^2$/g, or even from 670 to 890 m$^2$/g.

In some exemplary embodiments, the porous silica particles of the present invention (e.g., the finished particles) also may have a DOA oil absorption number of at least 200 ml/100 g. In some exemplary embodiments, the porous silica particles have a DOA oil absorption number of from 250 to 400 ml/100 g. In other exemplary embodiments, the porous silica particles have a DOA oil absorption number of from 260 to 380 ml/100 g.

In some exemplary embodiments, the porous silica particles of the present invention (e.g., the finished particles) may have a specific surface area, as measured by the single point nitrogen adsorption method, of at least 650 $m^2$/g and a DOA oil absorption number of at least 200 ml/100 g. In some exemplary embodiments, the porous silica particles have a specific surface area of from 650 to 1000 $m^2$/g and a DOA oil absorption number of from 250 to 400 ml/100 g. In other exemplary embodiments, the porous silica particles have a specific surface area of from 660 to 900 $m^2$/g, or even from 670 to 890 $m^2$/g and a DOA oil absorption number of from 260 to 380 ml/100 g.

In further exemplary embodiments, the finished particles of the present invention may have a porosity such that at least 0.5 $cm^3$/g of pore volume, as measured by BJH nitrogen porosimetry, is from pores having a pore size of 10 nm (100 Å) or smaller, wherein the porosity of the particles is measured after drying the particles at 200°C for at least 2 hours followed by an activation at 200°C for two hours under vacuum. In some exemplary embodiments, the finished particles may have a porosity such that at least 0.6 $cm^3$/g of pore volume, as measured by BJH nitrogen porosimetry, is from pores having a pore size of 10 nm (100 Å) or smaller, wherein the porosity of the particles is measured after drying the particles at 200°C for at least 2 hours followed by an activation at 200°C for two hours under vacuum. In other exemplary embodiments, the finished particles possess a total porosity of at least 1.5 $cm^3$/g of pore volume, at least 1.6 $cm^3$/g of pore volume, at least 1.7 $cm^3$/g of pore volume, at least 1.8 $cm^3$/g of pore volume, at least 1.9 $cm^3$/g of pore volume, or even at least 2.0 $cm^3$/g of pore volume, as measured by BJH nitrogen porosimetry. In even further exemplary embodiments, the finished particles possess a total porosity of 1.5 $cm^3$/g of pore volume to 4.0 $cm^3$/g of pore volume, or 1.7 $cm^3$/g of pore volume to 3.0 $cm^3$/g of pore volume, as measured by BJH nitrogen porosimetry.

In further exemplary embodiments, the finished particles of the present invention may have a porosity such that at least 0.6 $cm^3$/g of pore volume, as measured by BJH nitrogen porosimetry, is from pores having a pore size of 16 nm (160 Å) or smaller, wherein the porosity of the particles is measured after drying the particles at 200°C for at least 2 hours followed by an activation at 200°C for two hours under vacuum. In some exemplary embodiments, the finished particles may have a porosity such that at least 0.7 $cm^3$/g of pore volume, as measured by BJH nitrogen porosimetry, is from pores having a pore size of 16 nm (160 Å) or smaller, wherein the porosity of the particles is measured after drying the particles at 200°C for at least 2 hours followed by an activation at 200°C for two hours under vacuum.

II. Methods of Making Porous Silica Particles

The present invention is also directed to methods of making porous silica particles. Raw materials used to form the porous silica particles of the present invention, as well as method steps for forming the porous silica particles of the present invention are discussed below.

A. Raw Materials

The methods of making porous silica particles of the present invention may utilize a number of porous silica particle-forming raw materials. Suitable silica particle-forming raw materials include, but are not limited to, alkali metal silicate (often mentioned in the literature as water glass), and sulfuric acid. Any commercially available water glass and sulfuric acid may be used in the present invention. In one exemplary embodiment, water glass, commercially available under the trade designation Sodium Silicate 38/40 from Woellner GmbH&Co.KG, Ludwigshafen, Germany, is used to form porous silica particles. Alternately, the alkali metal silicate used for making the silicas may be made by reaction of silicon dioxide and alkali metal carbonate when molten to form alkali metal silicate and carbon dioxide. The resulting alkali metal silicate is typically, after being cooled from the melt, in solid lump form, but it may be converted to powder form, or even into an aqueous solution.

B. Process Steps

The porous silica particles of the present invention are typically prepared using a multi-step precipitation process, wherein porous silica particles are precipitated under high shear, filtered to remove the porous silica particles from the reaction slurry, washed as a crude filter cake to remove reaction residues, and then rapidly dried directly from the filter cake without the need for re-slurrying the particles. It has been discovered that the rapid drying step is of particular importance in controlling the pore structure of the resulting particles. The resulting porous silica particles can then be used as-is or sized to an appropriately narrow particle size distribution by various means.

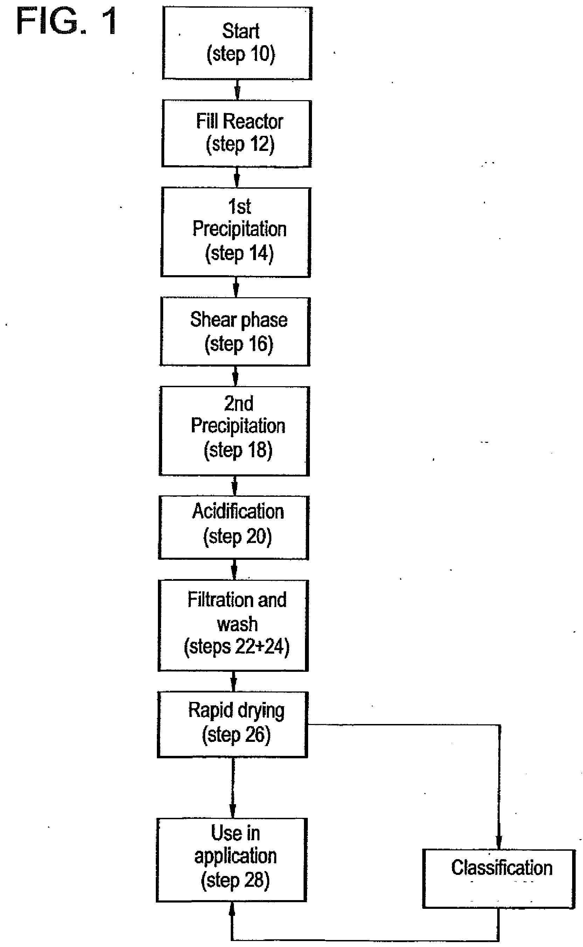

FIG. 1 depicts a block diagram of an exemplary process for forming porous silica particles of the present invention. As shown in FIG. 1, exemplary process 100 begins at start block 10, and proceeds to a reactor fill step 12. In

5

this step, a reactor vessel is filled with water (e.g., process or de-ionized water), which may be at a temperature of 40°C.

From step 12, exemplary process 100 proceeds to a first precipitation step 14. In first precipitation step 14, silica particle-forming reagents are introduced into the reaction vessel, while mixing under high shear. The silica particle-forming reagents are independently fed into the reaction vessel at controlled feed rates, concentrations and temperatures for a first length of time so as to result in a first reaction mixture. Typically, the first length of time is less than 20 minutes, and more typically, between 10 and 15 minutes. Desirably, mixing under high shear (e.g., up to 23 m/s nominal mixer tip speed) throughout exemplary process 100 comprises utilizing a high shear disintegrator (e.g., a DISPAX Reactor from IKA Works (Wilmington, NC)) in a bypass mode to circulate the silica particle-forming reagents (and precipitated particles) through the reaction vessel and the high shear disintegrator. It is believed (without being bound therewith to any particular theory) that the use of the high shear mixing during the first precipitation step allows for control the particle size in the slurry at this stage of the reaction leading to, or at least supporting, the resulting desirable properties of the present invention particles.

From step 14, exemplary process 100 proceeds to a shear phase step 16, wherein introduction of silica particle-forming reagents into the reaction vessel is halted, and mixing under high shear continues for a second length of time. Typically, the second length of time is less than 120 minutes, and more typically, between 75 and 100 minutes. It is also believed (without being bound therewith to any particular theory) that the use of the high shear mixing during the shear phase step allows for control the particle size in the slurry at this stage of the reaction leading to, or at least supporting, the resulting desirable properties of the present invention particles.

From step 16, exemplary process 100 proceeds to a second precipitation step 18. As in first precipitation step 14, in second precipitation step 18, the silica particle-forming reagents are again independently fed into the reaction vessel at controlled feed rates and concentrations under use of high shear mixing for a third length of time so as to result in a second reaction mixture. Typically, the third length of time is less than 60 minutes, and more typically, between 30 and 45 minutes. It is further believed (without being bound therewith to any particular theory) that the use of the high shear mixing during the second precipitation step allows for control the particle size in the slurry at this stage of the reaction leading to, or at least supporting, the resulting desirable properties of the present invention particles.

From step 18, exemplary process 100 proceeds to an acidification step 20, wherein acid is introduced into the second reaction mixture so as to reduce the pH of the second reaction mixture to 4.0 resulting in a third reaction mixture. Following step 20, exemplary process 100 proceeds to a filtration step 22, wherein precipitated silica particles are physically separated from the liquid of the third reaction mixture, using suitable filtration equipment (e.g. drum filter, belt filter, filter press, membrane filter).

From step 22, exemplary process 100 proceeds to a washing step 24, wherein the precipitated silica particles are washed with water (e.g., process or de-ionized water) resulting in washed precipitated silica particles in the form of a filter cake. Alternatively, steps 22 and 24 may be performed on the same device in one operating step. From step 24, exemplary process 100 proceeds to a rapid drying step 26, wherein the washed precipitated silica particles filter-cake is rapidly dried without prior re-slurrying to form dried porous silica particles.

Rapid drying step 26 typically comprises the following sequence of drying steps. In one exemplary rapid drying step 26, washed precipitated silica particles (i.e., filter-cake) are subjected to a rapid drying temperature ranging from 300 to 800°C, or 400 to 700°C, for a rapid drying period of less than 5 minutes, or 4 minutes, or 3 minutes, or 2 minutes, or even less than 1 minute.

Unlike known spray-drying techniques, rapid drying step 26 is suitable for drying washed precipitated silica particles without the need for one or more re-slurrying steps required in known spray-drying techniques, which makes the processing considerably more economic since this eliminates raw material costs, processing time, and energy costs (due to reduced water evaporation effort required per kg of product produced). Washed precipitated silica particles (filter-cake) proceed directly to a dryer in rapid drying step 26 from washing step 24.

From step 26, exemplary process 100 may proceed directly to step 28, wherein the resulting dried silica particles (i.e., the semi-finished particles) are used in a given application without further processing (e.g., without milling and/or granulating).

The semi-finished product may also be classified using a sifter without an upstream comminution process.

The particles may be packaged for shipment or mixed with various components depending upon the application or formulation desired. Alternatively, the particles may be further processed by surface treating the particles with an organic coating, such as wax, silane, etc. Such treatments are described in DE 1 006 100, DE 1 592 865, US 5,221,337 and US 6,294,505.

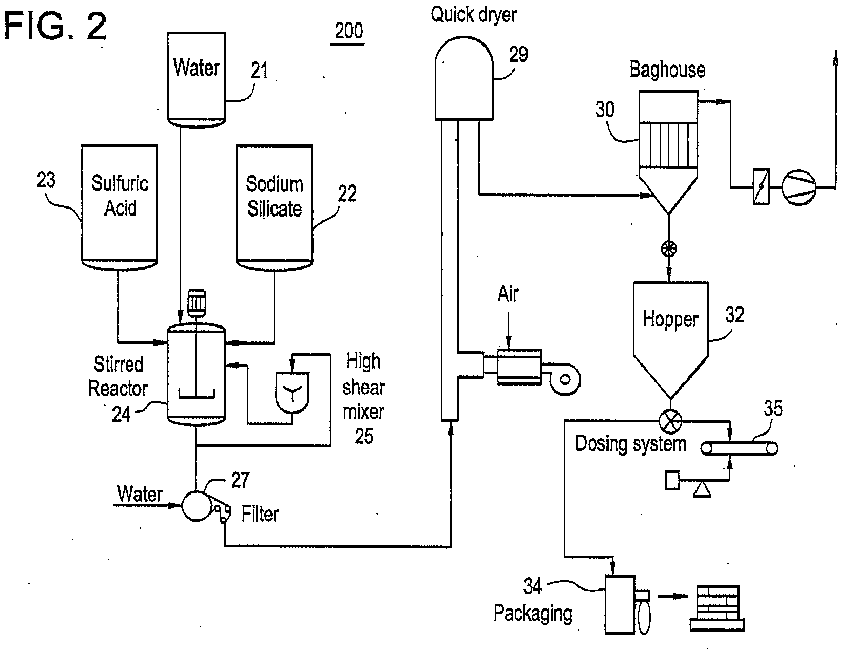

FIG. 2 depicts a schematic diagram of an exemplary process for forming porous silica particles of the present invention. As shown in FIG. 2, tanks 21, 22, and 23 feed raw materials, such as water sulfuric acid and sodium silicate, into reactor 24. A high shear mixer 25 provides shear on the contents of the reactor 24. Following the reaction, silica particles that have been formed are sent to belt filter 27 where they are drained and/or filtered and washed, which forms a filter cake. Subsequently, the filter cake is moved to the rapid dryer 29, where the particles are dried over a short period of time such that the moisture level of the particles are less than 10% by weight based upon the weight of the particles.

The gas stream exiting the dryer 29 is directed to a baghouse 30 where the particles are collected and subsequently sent to a hopper 32 where the particles are classified, such as by use of a sifter (not shown) and sent to a packaging station 34.

III. Methods of Using Porous Silica Particles

The present invention is further directed to methods of using porous silica particles. In some exemplary methods of using porous silica particles, the methods comprise utilizing semi-finished (e.g., unmilled particles; particles "as-is" after exiting the dryer without further processing) porous silica particles, formed by the disclosed methods, in a given application. Applications in which semi-finished porous silica particles may be used include, but are not limited to, utilizing the semi-finished particles as a beer clarification agent, utilizing the semi-finished particles as a catalyst carrier, and utilizing the semi-finished particles as a desiccant.

In other exemplary methods of using porous silica particles, the method comprises utilizing finished porous silica particles, formed by the disclosed methods, in a given application. Applications in which finished porous silica particles may be used include, but are not limited to, utilizing the finished particles as a matting agent in various coatings, anti-block agents in plastic films, fillers in polymers, thickeners in liquids, abrasives or thickeners in toothpastes, additives in cosmetic formulations, filtering agents in beer stabilization or edible oil purification.

In other exemplary embodiments, methods of using porous silica particles of the present invention may comprise utilizing the porous silica particles in applications including, but not being limited to, as a filler/reinforcing material in rubber, tires, shoe soles; as anti-caking additive or free flow agent in powdered or liquid materials (e.g., cosmetics, salts and foods); as a filler material in adhesives, paints and colorants, health care products such as toothpaste, other pastes, ointments and cosmetics, and pharmaceuticals.

The present invention is further illustrated by the following examples, which are not to be construed in any way as imposing limitations upon the scope thereof.

EXAMPLES

The following materials and test methods were used in the examples below.

Materials:

The following materials were used in the examples.

Table 1. Materials

| Material | Product Name | Source |
|---|---|---|
| sulfuric acid | Sulfuric Acid | Th. Goldschmidt AG, Essen, Germany |
| water glass liquid | Sodium Silicate 38/40 | Woellner GmbH&Co.KG, Ludwigshafen, Germany |
| water | Process water | Deep well |

Test Methods:

Particle Size Test Method

The average particle size of a plurality of particles is determined using the particle size test method as described in ISO/FSD 13320-1.

Particle Single Point Nitrogen Adsorption Surface Area Test Method

The average surface area of a plurality of particles is determined as described in ISO 5794-1:2005.

DOA Oil Absorption Test Method

The oil absorption of a plurality of particles is determined using the oil absorption test method as described in ASTM D 2414 Method B, with the use of DOA (dioctyladipate) as the penetrating oil.

Particle Stability Test Method

In this test, a plurality of semi-finished particles are tested for their stability after milling. The particle stability index is the quotient of the median particle size from 2 particle size measurements on the same sample according to ISO/FSD 13320-1. Sample preparation is conducted with two different intensities of ultrasonic pretreatment. About 1 g of silica is put into a 150 ml beaker and 100 to 120 ml of deionized water is added thereto. The tip of the ultrasonic resonator (Branson Sonifier W250D) is immersed 2 cm into the fluid and in the center of the beaker. The sonification is conducted with a power setting of 55% for 10 s for measurement 1 and 60 s for measurement 2.

The particle stability index is calculated as follows:

$$\text{Stability Index } [\%] = (d0.5_{60s})) / (d0.5_{10s}) * 100$$

Particle Pore Volume Test Method

The average pore volume of a plurality of particles is determined using the BJH nitrogen porosimetry as described in DIN 66134.

EXAMPLE 1 - Preparation of Porous Semi-Finished Silica Particles

A reaction vessel was filled with 175.5 liter of distilled deionized (via ionexchange) water having a temperature of 40°C. The reaction vessel was in fluid communication with a DISPAX™ reactor (i.e., an inline, high shear disintegrator commercially available under the trade designation DISPAX™ Reactor DR2000 from DCA Works (Wilmington, NC)). The DISPAX™ Reactor DR2000 was operating in a bypass mode using the following settings: tip speed 23 m/s, flow rate = 25001/h.

In a first precipitation step, $H_2SO_4$ (97%) and WGL38/40 were simultaneously fed into the system while mixing under high shear. 1150g of $H_2SO_4$ (97%) was fed into the system at a feed rate of 88.5 g/min. 8437g of WGL38/40 was fed into the system at a feed rate of 649 g/min. The reactants are added at room temperature and the reactor is maintained at atmospheric pressure.

Once the 1150g of $H_2SO_4$ (97%) and the 8437g of WGL38/40 were in the system, the reaction mixture was circulated through the system, under high shear, at a flow rate of 25001/h for a period of 90 minutes (i.e., the shear phase).

Following the shear phase, a second precipitation step was initiated. In the second precipitation step, 3805g of $H_2SO_4$ (97%) was fed into the system at a feed rate of 88.5 g/min, while 27907g of WGL38/40 was simultaneously fed into the system at a feed rate of 649 g/min.

Once the additional 3805g of $H_2SO_4$ (97%) and the additional 27907g of WGL38/40 were in the system, the pH of the reaction mixture was reduced, under high shear, to a pH of 4.0. The resulting acidified reaction mixture was filtered using a membrane filter press to separate precipitated silica particles from the acidified reaction mixture. The separated precipitated silica particles were washed and then introduced into a dryer (Lab Scale Flash Drier), commercially available under the trade designation Anhydro from Soeborg, Denmark, and rapidly dried at 350°C so that the particles possessed less than 10% moisture based upon the weight of the particles. The particles of Sample 1 have an average particle size of 11.7 microns. The particles of Sample 2 have an average particle size of 23.7 microns. The particles of Sample 3 have an average particle size of 12.9 microns. For Sample 4, a semi-finished precipitated silica was selected (after milling is commercially available from Grace GmbH & Co. KG as Perkasil®KS408 silica).

The resulting semi-finished silica particles were tested to determine average particle size, and particle stability using the above-described test methods. The results are provided in Table 2 below.

Table 2. Semi-Finished Silica Particle Properties

| Sample | Average Particle Size ($\mu$m) | Average Particle Stability |
|--------|-------------------------------|----------------------------|
| 1 | 11.7 | 91% |
| 2 | 23.7 | 99% |
| 3 | 12.9 | 81% |
| 4 | 36.4 | 51% |

As is apparent from Table 2, the average Particle Stability is quite high for Sample 1-3, whereas the average Particle Stability for Sample 4 is quite low.

EXAMPLE 2 - Preparation of Porous Finished Silica Particles (not of the invention)

The semi-finished silica particles formed in Example 1 were subjected to a fluid energy milling step as follows. The semi-finished silica from Example 1 is fed into an air jet mill available from Netzsch-Condux Mahltechnik GmbH at a rate of 250 kg/h. The mill is operated at an air flow rate of 400 $m^3$/h and a temperature above 200 degrees centigrade, and the particles are milled until the average particle size is less than 10 microns. The particles are collected in a baghouse and their properties measured. Acematt HK400, available from Evonik Industries, is used as a comparison Sample 8.

The resulting finished silica particles were tested to determine average particle size, single point nitrogen adsorption surface area, DOA oil absorption number, and pore volume using the above-described test methods. The results are provided in Table 3 below.

Table 3. Finished Silica Particle Properties

| Sample | Average Particle Size ($\mu$m) | Surface Area ($m^2$/g) | DOA Oil Absorption (ml/100g) | Pore Volume (cc/g) |
|---|---|---|---|---|
| 5 | 8.9 | 853 | 321 | 1.95 |
| 6 | 5.9 | 853 | 351 | 1.95 |
| 7 | 5.2 | 805 | 295 | 2.03 |
| 8 | 5.2 | 226 | 270 | 1.90 |

As is apparent from Table 3, the average single point surface area and DOA oil adsorption are quite high for Sample 5-7, whereas the single point surface area and DOA oil adsorption are much lower for Sample 8.

EXAMPLE 3 - Preparation of Porous Finished Silica Particles (not of the invention)

The semi-finished silica particles formed in Example 1 were subjected to a mechanical classifier milling step as follows. The semi-finished silica from Example 1 is fed into a CSM classifier mill available from Netzsch-Condux Mahltechnik GmbH at a rate of 750kg/h. The mill is operated at maximum circumferential speed and the particles are milled until the average particle size is less than 10 microns. The particles are collected in a baghouse and their properties measured. Lovel 600, available from PPG Industries, is used as a comparison Sample 12.

The resulting finished silica particles were tested to determine average particle size, single point nitrogen adsorption surface area, DOA oil absorption number, and pore volume using the above-described test methods. The results are provided in Table 4 below.

Table 4. Finished Silica Particle Properties

| Sample | Average Particle Size ($\mu$m) | Surface Area ($m^2$/g) | DOA Oil Absorption (ml/100g) | Pore Volume (cc/g) |
|---|---|---|---|---|
| 9 | 9.2 | 785 | 325 | 1.91 |
| 10 | 9.1 | 734 | 314 | 1.83 |
| 11 | 9.5 | 757 | 330 | 1.82 |
| 12 | 10.4 | 660 (BET) | 250 | 1.70 |

As is apparent from Table 4, the average single point surface area and the DOA oil adsorption number are quite high for Sample 9-11, whereas the single point surface area and the DOA oil adsorption number are much lower for Sample 12.

While the invention has been described with a limited number of embodiments, these specific embodiments are not intended to limit the invention as claimed herein. All parts and percentages in the examples, as well as in the remainder of the specification, are by weight unless otherwise specified. Any modifications of the invention, in addition to those shown and described herein, will become apparent to those skilled in the art from the foregoing description and accompanying drawings. Such modifications fall within the scope of the appended claims.

**Claims**

1. Porous silica particles formed by a method comprising the steps of:

forming precipitated silica particles within a reaction mixture while mixing under high shear conditions;
separating the precipitated silica particles from liquid within the reaction mixture;
washing the precipitated silica particles to produce washed precipitated silica particles; and
rapid drying the washed precipitated silica particles to form dried porous silica particles,

wherein said forming step comprises:

introducing silica particle-forming reagents into a reaction vessel, while mixing under high shear conditions, for a first length of time so as to result in a first reaction mixture;
following the first length of time, halting introduction of silica particle-forming reagents into the reaction vessel while continuing said mixing under high shear dispersion force for a second length of time;
following the second length of time, introducing the silica particle-forming reagents into the reaction vessel, while mixing under high shear, for a third length of time so as to result in a second reaction mixture; and
following the third length of time, acidifying the second reaction mixture under high shear dispersion force so as to reduce a pH of the second reaction mixture to about 4.0 resulting in a third reaction mixture,
wherein the first length of time is less than 15 minutes, the second length of time is less than 120 minutes, and the third length of time is less than 45 minutes, and
wherein said dried porous silica particles, which are not further processed following formation, have

(a) a median particle size of more than 1.0 microns; and
(b) a particle stability of at least 55% as measured via the Particle Stability Test Method, the particle stability index being the quotient of the median particle size from 2 particle size measurements on the same sample according to ISO/FSD 13320-1, and the sample preparation is conducted with two different intensities of ultrasonic pretreatment, wherein 1 g of silica is put into a 150 ml beaker, 100 to 120 ml of deionized water is added thereto, the tip of the ultrasonic resonator is immersed 2 cm into the fluid and in the center of the beaker, the sonification is conducted with a power setting of 55% for 10 s for measurement 1 and 60 s for measurement 2, and the particle stability index is calculated as follows:

$$\text{Stability Index [\%]} = (d0.5_{60s}))/(d0.5_{10s}) * 100.$$

2. The silica particles of claim 1, wherein the method further comprises classifying said dried porous silica particles to form porous silica particles having an average particle size ranging less than 30 microns, said classified silica particles having:

(a) a single point nitrogen adsorption surface area of at least 650 $m^2$/g; and
(b) a DOA oil absorption number of at least 260 ml/100g.

3. The silica particles of claim 2, said silica particles having a porosity such that at least 0.5 $cm^3$/g of pore volume, as measured by BJH nitrogen porosimetry, is from pores having a pore size of 10 nm (100 Å) or smaller, wherein the porosity of the particles is measured after drying the particles at 200°C for at least 2 hours followed by an activation at 200°C for two hours under vacuum.

4. The silica particles of claim 2, said silica particles having a median particle size in the range of 1 to 30 microns.

5. The silica particles of claim 4, wherein the particles comprise:

(a) a single point nitrogen adsorption surface area of from 675 to 1000 $m^2$/g; and
(b) a DOA oil absorption number of from 280 to 360 ml/100g.

6. The silica particles of claim 4, wherein the particles comprise:

(a) a single point nitrogen adsorption surface area of from 650 to 1000 $m^2$/g; and
(b) a DOA oil absorption number of from 290 to 350 ml/100g.

**7.** The silica particles of claim 4, wherein the porous silica particles comprise precipitated particles.

**8.** The silica particles of claim 4, wherein the particles comprise a porosity such that at least 0.6 cm$^3$/g of pore volume, as measured by BJH nitrogen porosimetry, is from pores having a pore size of 16 nm (160 Å) or smaller, wherein the porosity of the particles is measured after drying the particles at 200°C for at least 2 hours followed by an activation at 200°C for two hours under vacuum.

**9.** The silica particles of claim 8, wherein the particles comprise a total porosity of at least 1.5 cm$^3$/g of pore volume, as measured by BJH nitrogen porosimetry.

**10.** The silica particles of claim 8, wherein the particles comprise a total porosity of at least 1.7 cm$^3$/g of pore volume, as measured by BJH nitrogen porosimetry.

**11.** The silica particles of claim 1, wherein the silica particle-forming reagents comprise alkali metal silicate and sulfuric acid.

**12.** The silica particles of claim 11, wherein said mixing under high shear comprises utilizing a high shear disintegrator in a bypass mode to circulate the silica particle-forming reagents through the reaction vessel and the high shear disintegrator.

**13.** The silica particles of claim 1, wherein the first length of time is 13 minutes, the second length of time is 90 minutes, and the third length of time is 43 minutes.

**14.** The silica particles of claim 1, wherein the precipitated silica particles from said separating step are fed directly as a filter cake to a rapid dryer utilized in said rapid drying step without a re-slurrying step therebetween.

**15.** The silica particles of claim 1, wherein the precipitated silica particles are subjected to a rapid drying temperature ranging from 300°C to 700°C for a rapid drying period of from 2 seconds to 2 minutes during said rapid drying step.

**16.** Use of the silica particles of claim 1 as a beer clarification agent.

**17.** Use of the silica particles of claim 2 as a filtering agent in beer stabilization.

**Patentansprüche**

**1.** Poröse Siliciumdioxid-Teilchen, die durch ein Verfahren gebildet wurden, das die Schritte:

Bilden von ausgefällten Siliciumdioxid-Teilchen in einer Reaktionsmischung, während unter Hochscherungsbedingen gemischt wird,
Abtrennen der ausgefällten Siliciumdioxid-Teilchen von der Flüssigkeit in der Reaktionsmischung,
Waschen der ausgefällten Siliciumdioxid-Teilchen, um gewaschene, ausgefällte Siliciumdioxid-Teilchen zu erzeugen, und
Schnelltrocknen der gewaschenen, ausgefällten Siliciumdioxid-Teilchen umfasst, um getrocknete, poröse Siliciumdioxid-Teilchen zu bilden,
wobei der Schritt des Bildens umfasst:

Einführen von Siliciumdioxid bildenden Reagenzien in ein Reaktionsgefäß über einen ersten Zeitraum, während unter Hochscherungsbedingungen gemischt wird, um so eine erste Reaktionsmischung zu erhalten,
Anhalten des Einführens von siliciumdioxid bildenden Reagenzien in das Reaktionsgefäß über einen zweiten Zeitraum anschließend an den ersten Zeitraum, während fortgesetzt mit Hochscherungsdispersionskraft gerührt wird,
Einführen von Siliciumdioxid bildenden Reagenzien in das Reaktionsgefäß über einen dritten Zeitraum, während unter Hochscherung gemischt wird, um so eine zweite Reaktionsmischung zu erhalten, und
Ansäuern der zweiten Reaktionsmischung unter Hochscherungsdispersionskraft im Anschluss an den dritten Zeitraum, um so einen pH-Wert der zweiten Reaktionsmischung auf etwa 4,0 zu senken, was zu einer dritten Reaktionsmischung führt,

wobei der erste Zeitraum kürzer als 15 Minuten ist, der zweite Zeitraum kürzer als 120 Minuten ist und der dritte Zeitraum kürzer als 45 Minuten ist, und

wobei die getrockneten, porösen Siliciumdioxid-Teilchen, die im Anschluss an die Bildung nicht weiterverarbeitet werden,

(a) eine mediane Teilchengröße von mehr als 1,0 Mikrometer, und

(b) eine Teilchenstabilität von mindestens 55% aufweisen, wie gemessen mittels dem Teilchenstabilitätstest-Verfahren, wobei der Teilchenstabilitätsindex der Quotient der medianen Teilchengröße von 2 Teilchengrößenmessungen an der gleichen Probe gemäß ISO/FSD 13320-1 ist, und die Probenherstellung mit zwei verschiedenen Intensitäten von Ultraschallvorbehandlung durchgeführt wird, wobei 1 g Siliciumdioxid in ein 150 ml Becherglas gegeben werden, 100 bis 120 ml entionisiertes Wasser zugegeben werden, die Spitze des Ultraschallresonators 2 cm tief und im Zentrum des Becherglases in die Flüssigkeit eingetaucht wird, die Beschallung mit einer Energieeinstellung von 55% für 10 s für eine Messung 1 und 60 s für eine Messung 2 durchgeführt wird, und der Teilchenstabilitätsindex wie folgt berechnet wird:

$$\text{Stabilitätsindex [\%]} = (d0,5_{60s})/(d0,5_{10s}) * 100.$$

2. Siliciumdioxid-Teilchen nach Anspruch 1, bei denen das Verfahren ferner Klassieren der getrockneten, porösen Siliciumdioxid-Teilchen umfasst, um poröse Siliciumdioxid-Teilchen zu bilden, die eine durchschnittliche Teilchengröße im Bereich von weniger als 30 Mikrometer aufweisen, wobei die klassierten Siliciumdioxid-Teilchen

(a) eine Einzelpunkt-Stickstoffadsorptionsoberfläche von mindestens 650 $m^2/g$ und

(b) eine DOA-Ölabsorptionszahl von mindestens 260 ml/100g aufweisen.

3. Siliciumdioxid-Teilchen nach Anspruch 2, bei denen die Siliciumdioxid-Teilchen eine solche Porosität aufweisen, dass mindestens 0,5 $cm^3/g$ Porenvolumen, wie gemessen durch BJH-Stickstoffporosimetrie, von Poren mit einer Porengröße von 10 nm (100 Å) oder kleiner stammen, wobei die Porosität der Teilchen nach dem Trocknen der Teilchen bei 200°C für mindestens 2 Stunden gefolgt von Aktivierung bei 200°C für 2 Stunden unter Vakuum gemessen wird.

4. Siliciumdioxid-Teilchen nach Anspruch 2, bei denen die Siliciumdioxid-Teilchen eine mediane Teilchengröße im Bereich von 1 bis 30 Mikrometer aufweisen.

5. Siliciumdioxid-Teilchen nach Anspruch 4, bei denen die Teilchen umfassen:

(a) eine Einzelpunkt-Stickstoffadsorptionsoberfläche von 675 bis 1000 $m^2/g$ und

(b) eine DOA-Ölabsorptionszahl von 280 bis 360 ml/100g aufweisen.

6. Siliciumdioxid-Teilchen nach Anspruch 4, bei denen die Teilchen umfassen:

(c) eine Einzelpunkt-Stickstoffadsorptionsoberfläche von 650 bis 1000 $m^2/g$ und

(d) eine DOA-Ölabsorptionszahl von 290 bis 350 ml/100g aufweisen.

7. Siliciumdioxid-Teilchen nach Anspruch 4, bei denen die porösen Siliciumdioxid-Teilchen ausgefällte Teilchen umfassen.

8. Siliciumdioxid-Teilchen nach Anspruch 4, bei denen die Teilchen eine solche Porosität aufweisen, dass mindestens 0,6 $cm^3/g$ Porenvolumen, wie gemessen durch BJH-Stickstoffporosimetrie, von Poren mit einer Porengröße von 16 nm (160 Å) oder kleiner stammen, wobei die Porosität der Teilchen nach dem Trocknen der Teilchen bei 200°C für mindestens 2 Stunden gefolgt von Aktivierung bei 200°C für 2 Stunden unter Vakuum gemessen wird.

9. Siliciumdioxid-Teilchen nach Anspruch 8, bei denen die Teilchen eine Gesamtporosität von mindestens 1,5 $cm^3/g$ Porenvolumen aufweisen, wie gemessen durch BJH-Stickstoffporosimetrie.

10. Siliciumdioxid-Teilchen nach Anspruch 8, bei denen die Teilchen eine Gesamtporosität von mindestens 1,7 $cm^3/g$

Porenvolumen aufweisen, wie gemessen durch BJH-Stickstoffporosimetrie.

11. Siliciumdioxid-Teilchen nach Anspruch 1, bei denen die Siliciumdioxid bildenden Reagenzien Alkalimetallsilikat und Schwefelsäure umfassen.

12. Siliciumdioxid-Teilchen nach Anspruch 11, bei denen das Mischen unter Hochscherung die Verwendung eines Hochscherungsdesintegrators in einem by-pass-Modus umfassen, um die Siliciumdioxid bildenden Reagenzien durch das Reaktionsgefäß und den Hochscherungsdesintegrator zu zirkulieren.

13. Siliciumdioxid-Teilchen nach Anspruch 1, bei denen der erste Zeitraum 13 Minuten dauert, der zweite Zeitraum 90 Minuten dauert und der dritte Zeitraum 43 Minuten dauert.

14. Siliciumdioxid-Teilchen nach Anspruch 1, bei denen die ausgefällten Siliciumdioxid-Teilchen aus dem Abtrennungsschritt direkt als Filterkuchen einem Schnelltrockner zugeführt werden, der in dem Schnelltrocknungsschritt verwendet wird, ohne einen Schritt einer erneuten Aufschlämmung dazwischen.

15. Siliciumdioxid-Teilchen nach Anspruch 1, bei denen die ausgefällten Siliciumdioxid-Teilchen während des Schnelltrocknungsschritts einer Schnelltrocknungstemperatur im Bereich von 300°C bis 700°C über einen Schnelltrocknungszeitraum 2 Sekunden bis 2 Minuten unterzogen werden,

16. Verwendung der Siliciumdioxid-Teilchen gemäß Anspruch 1 als Bierklärmittel.

17. Verwendung der Siliciumdioxid-Teilchen gemäß Anspruch 2 als Filtriermittel bei der Bierstabilisierung.

## Revendications

1. Particules de silice poreuses formées par un procédé comprenant les étapes consistant à :

   - former des particules de silice précipitées dans un mélange réactionnel tout en mélangeant dans des conditions de cisaillement élevé ;
   - séparer les particules de silice précipitées du liquide au sein du mélange réactionnel ;
   - laver les particules de silice précipitées pour produire des particules de silice précipitées lavées ; et
   - séchage rapide des particules de silice précipitées lavées pour former des particules de silice poreuses séchées,

   cette étape de formation comprenant :

   ▪ l'introduction de réactifs formant des particules de silice dans un récipient de réaction, tout en mélangeant dans des conditions de fort cisaillement, pendant une première durée de temps, de manière à obtenir un premier mélange réactionnel ;
   ▪ à la suite de la première durée de temps, arrêter l'introduction de réactifs formant des particules de silice dans le récipient de réaction tout en poursuivant ledit mélange sous une force de dispersion de cisaillement élevée pendant une seconde durée de temps ;
   ▪ à la suite de la deuxième durée de temps, introduire les réactifs formant des particules de silice dans le récipient de réaction, tout en mélangeant sous fort cisaillement, pendant une troisième durée de temps, de manière à obtenir un deuxième mélange réactionnel ; et
   ▪ à la suite de la troisième durée de temps, acidifier le deuxième mélange réactionnel sous une force de dispersion de cisaillement élevée de manière à réduire le pH du deuxième mélange réactionnel à environ 4,0, ce qui donne un troisième mélange réactionnel,
   où la première durée de temps est inférieure à 15 minutes, la seconde durée de temps est inférieure à 120 minutes et la troisième durée de temps est inférieure à 45 minutes, et où lesdites particules de silice poreuse séchées, qui ne sont pas traitées ultérieurement après leur formation, ont

   (a) une taille médiane de particules supérieure à 1,0 micron ; et
   (b) une stabilité de particules d'au moins 55%, mesurée via la méthode de test de stabilité de particules, l'indice de stabilité de particules étant le quotient de la taille médiane de particules à partir de 2 mesures de la taille de particules effectuées sur le même échantillon effectuées selon la norme ISO/FSD 13320-1, et la préparation de l'échantillon est réalisée avec deux intensités différentes de prétraitements ultrasoniques, où on ajoute 1 g de silice dans un bécher de 150ml, puis sont ajoutés 100 à 120ml d'eau désionisée, le sommet du résonateur ultrasonique étant immergé de 2cm dans le fluide, au centre du bécher, la sonification étant réalisée avec un réglage de puissance de 55% pendant 10 s pour la mesure 1 et à 60 s pour la mesure 2, et l'indice de stabilité des particules est calculé comme suit :

$$\text{Indice de stabilité [\%]} = (do.5_{60s})/(do.5_{10s})*100$$

2. Les particules de silice selon la revendication 1, dans lesquelles le procédé comprend en outre la classification desdites particules de la silice poreuse séchée pour former des particules de silice poreuse ayant une taille moyenne de particules moyenne d'un diamètre inférieur à 30 microns, lesdites particules de silice classifiées présentant :

   (a) une surface superficielle d'adsorption d'azote d'au moins 650 $m^2$/g; et
   (b) un indice d'absorption d'huile DOA d'au moins 260 ml/100 g.

3. Les particules de silice selon la revendication 2, lesdites particules de silice ayant une porosité telle qu'au moins 0,5 $cm^3$/g de volume de pores, mesuré par porosimétrie à l'azote BJH, proviennent de pores ayant une taille de pores de 10 nm (100 **Å**) ou inférieure, la porosité des particules étant mesurée après séchage des particules à 200°C pendant au moins 2 heures suivies d'une activation à 200°C pendant deux heures sous vide.

4. Les particules de silice selon la revendication 2, lesdites particules de silice ayant une taille médiane de particules allant de 1 à 30 microns.

5. Les particules de silice selon la revendication 4, dans lesquelles les particules comprennent :

   (a) une aire superficielle d'adsorption d'azote à un seul point comprise entre 675 et 1 000 $m^2$/g ; et
   (b) un indice d'absorption d'huile DOA de 280 à 360 ml/100 g.

6. Les particules de silice selon la revendication 4, dans lesquelles les particules comprennent :

   (a) une surface spécifique d'adsorption d'azote en un seul point de 650 à 1000 $m^2$/g ; et
   (b) un indice d'absorption d'huile DOA de 290 à 350 ml/100 g.

7. Les particules de silice selon la revendication 4, dans lesquelles les particules de silice poreuses comprennent des particules précipitées.

8. Les particules de silice selon la revendication 4, dans lesquelles les particules comprennent une porosité telle qu'au moins 0,6 $cm^3$/g de volume de pores, mesuré par porosimétrie à l'azote BJH, soit constitué de pores ayant une taille de pores de 16 nm (160 **Å**) ou inférieure, dans laquelle la porosité des particules est mesurée après séchage des particules à 200°C pendant au moins 2 heures, suivi d'une activation à 200°C pendant deux heures sous vide.

9. Les particules de silice selon la revendication 8, dans lesquelles les particules présentent une porosité totale d'au moins 1,5 $cm^3$/g de volume de pores, telle que mesurée par porosimétrie à l'azote BJH.

10. Les particules de silice selon la revendication 8, où les particules comprennent une porosité totale d'au moins 1,7 $cm^3$/g de volume de pores, telle que mesurée par porosimétrie à l'azote BJH.

11. Les particules de silice selon la revendication 1, dans lesquelles les réactifs formant des particules de silice comprennent un silicate de métal alcalin et de l'acide sulfurique.

12. Les particules de silice selon la revendication 11, dans lesquelles ledit mélange sous fort cisaillement comprend l'utilisation d'un désintégrateur à fort cisaillement en mode dérivation pour faire circuler les réactifs formant des particules de silice à travers le récipient de réaction et le désintégrateur à fort cisaillement.

13. Les particules de silice selon la revendication 1, dans lesquelles La première durée de temps est de 13 minutes, la deuxième durée de temps est de 90 minutes et la troisième durée de temps est de 43 minutes.

**14.** Les particules de silice selon la revendication 1, dans lesquelles les particules de silice précipitées provenant de ladite étape de séparation sont introduites directement sous forme d'un gâteau de filtration dans un sécheur rapide utilisé dans son étape de séchage rapide, sans que soit nécessaire que se produise une remise en suspension entre elles.

**15.** Les particules de silice de la revendication 1, dans lesquelles les particules de silice précipitées sont soumises à une température de séchage rapide allant de 300°C à 700°C pendant une période de séchage rapide de 2 secondes à 2 minutes au cours d'une étape de séchage rapide.

**16.** Utilisation des particules de silice selon la revendication 1 en tant qu'agent de clarification de la bière.

**17.** Utilisation des particules de silice selon la revendication 2 en tant qu'agent de filtration dans la stabilisation de la bière.

# FIG. 1

```
        ┌──────────────────┐
        │      Start       │
        │    (step 10)     │
        └──────────────────┘
                 │
                 ▼
        ┌──────────────────┐
        │   Fill Reactor   │
        │    (step 12)     │
        └──────────────────┘
                 │
                 ▼
        ┌──────────────────┐
        │       1st        │
        │  Precipitation   │
        │    (step 14)     │
        └──────────────────┘
                 │
                 ▼
        ┌──────────────────┐
        │   Shear phase    │
        │    (step 16)     │
        └──────────────────┘
                 │
                 ▼
        ┌──────────────────┐
        │       2nd        │
        │  Precipitation   │
        │    (step 18)     │
        └──────────────────┘
                 │
                 ▼
        ┌──────────────────┐
        │   Acidification  │
        │    (step 20)     │
        └──────────────────┘
                 │
                 ▼
        ┌──────────────────┐
        │  Filtration and  │
        │       wash       │
        │  (steps 22+24)   │
        └──────────────────┘
                 │
                 ▼
        ┌──────────────────┐
        │   Rapid drying   │──────────────┐
        │    (step 26)     │              │
        └──────────────────┘              │
                 │                        ▼
                 ▼              ┌──────────────────┐
        ┌──────────────────┐   │  Classification  │
        │      Use in      │   └──────────────────┘
        │   application    │              │
        │    (step 28)     │◀─────────────┘
        └──────────────────┘
```

16

FIG. 2

200

Water 21

Sulfuric Acid 23

Sodium Silicate 22

Stirred Reactor 24

High shear mixer 25

Water Filter 27

Quick dryer 29

Air

Baghouse 30

Hopper 32

Dosing system 35

34 Packaging

EP 2 571 808 B1

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03055802 A1
- US 20080160053 A1
- US 7566433 B2
- US 5643624 A
- DE 1006100
- DE 1592865
- US 5221337 A
- US 6294505 B